# EUROPEAN PATENT APPLICATION

(11) **EP 4 672 730 A1**
(43) Date of publication of application: **31.12.2025**
(21) Application number: 25183697.9
(22) Date of filing: 18.06.2025
(51) Int. Cl.: H04N 1/12, H04N 1/193

(54) **IMAGE READING APPARATUS**

(30) Priority: 25.06.2024 JP 2024102054
(71) Applicant: KYOCERA Document Solutions Inc., Osaka-shi, Osaka 540-8585 (JP)
(72) Inventor: Horiguchi, Yasuyuki, Osaka-shi, 540-8585 (JP)
(74) Representative: Plougmann Vingtoft a/s

(57) **Abstract**

A downstream-side guide member (22) is disposed along a region located further downstream with respect to a downstream adjacent region adjacent to a reading region on a first surface of a transparent plate member (16) on the downstream side. An upstream-side adhesive layer (25a) is formed in an upstream adjacent region adjacent to the reading region on an upstream side. Downstream-side adhesive layers (25b, 25c) are formed in the downstream adjacent region and on a surface of the downstream-side guide member (22). A transparent sheet (24) is bonded to the first surface of the transparent plate member (16) and the surface of the downstream-side guide member (22) by the upstream-side adhesive layer (25a) and the downstream-side adhesive layers (25b, 25c). The upstream-side adhesive layer (25a) and the downstream-side adhesive layers (25b, 25c) form a gap between the reading region on the transparent plate member (16) and the transparent sheet (24).

## Description

### INCORPORATION BY REFERENCE

This application is based upon and claims the benefit of priority from the corresponding Japanese Patent Application No. 2024-102054 filed on June 25, 2024, the entire contents of which are incorporated herein by reference.

### BACKGROUND

This disclosure relates to an image reading apparatus including a document sheet conveying device.

An image reading apparatus includes a document sheet conveying device in some cases. The document sheet conveying device conveys a document sheet along a conveyance path extending through a reading region on a surface of a transparent glass plate. The image reading apparatus emits light to the reading region through the glass plate and senses the amount of reflected light to read an image on the document sheet passing the reading region.

It has been known that a transparent sheet is disposed on the surface of the glass plate in the image reading apparatus and a surface of the transparent sheet undergoes surface treatment which reduces surface reflection.

The transparent sheet covers a step formed by a member disposed in a region adjacent to the reading region on the surface of the glass plate and smoothly guides the document sheet passing the reading region.

The surface treatment on the transparent sheet restrains reflected light by the surface of the glass plate and reflected light by the surface of the transparent sheet from causing interference fringes.

### SUMMARY

An image reading apparatus according to an aspect of this disclosure includes a transparent plate member, a document sheet conveying device, a main optical device, a downstream-side guide member, an upstream-side adhesive layer, downstream-side adhesive layers, and a transparent sheet. The document sheet conveying device conveys a document sheet along a conveyance path extending through a reading region on a portion of a first surface of the transparent plate member. The main optical device emits light to the reading region and senses an amount of reflected light to read an image on a first reading surface of the document sheet passing the reading region. The main optical device is disposed on a second surface side of the transparent plate member. The downstream-side guide member guides the document sheet passing the reading region on the first surface of the transparent plate member. The downstream-side guide member is disposed along a region located further downstream with respect to a downstream adjacent region in a document sheet conveying direction. The downstream adjacent region is adjacent to the reading region on a downstream side in the document sheet conveying direction. The upstream-side adhesive layer is formed in an upstream adjacent region adjacent to the reading region on an upstream side in the document sheet conveying direction. The reading region is located on the first surface of the transparent plate member. The downstream-side adhesive layers are formed in the downstream adjacent region on the first surface of the transparent plate member and on a surface of the downstream-side guide member. The transparent sheet is disposed from the upstream adjacent region on the first surface of the transparent plate member to the surface of the downstream-side guide member and bonded to the first surface of the transparent plate member and the surface of the downstream-side guide member by the upstream-side adhesive layer and the downstream-side adhesive layers. The upstream-side adhesive layer and the downstream-side adhesive layers form a gap between the reading region on the first surface of the transparent plate member and the transparent sheet.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a configuration diagram of an image reading apparatus according to an embodiment.
FIG. 2 is a configuration diagram of a CIS unit in the image reading apparatus according to the embodiment.
FIG. 3 is a top view of a body of the image reading apparatus according to the embodiment.
FIG. 4 is a cross-sectional view of an upper portion of the body of the image reading apparatus according to the embodiment.
FIG. 5 is a cross-sectional view of a reading region on a transparent plate member and a peripheral portion thereof in the image reading apparatus according to the embodiment.
FIG. 6 is a plan view of an adhesive layer in the image reading apparatus according to the embodiment.
FIG. 7 is a configuration diagram of a scanning unit according to a modification of the image reading apparatus according to the embodiment.

### DETAILED DESCRIPTION

Hereinafter, an embodiment of this disclosure will be described with reference to the drawings. It is noted that the following embodiment is a specific example of this disclosure and does not limit the technical scope of this disclosure.

### [Configuration of Image Reading Apparatus 1]

An image reading apparatus 1 according to a first embodiment executes an image reading process of reading an image on a document sheet 9. For example, the image reading apparatus 1 is included in some cases as a portion of an image processing apparatus such as a copying machine, a facsimile apparatus, or a multifunction peripheral.

In the following description, the image read from the document sheet 9 through the image reading process of the image reading apparatus 1 will be referred to as a readout image.

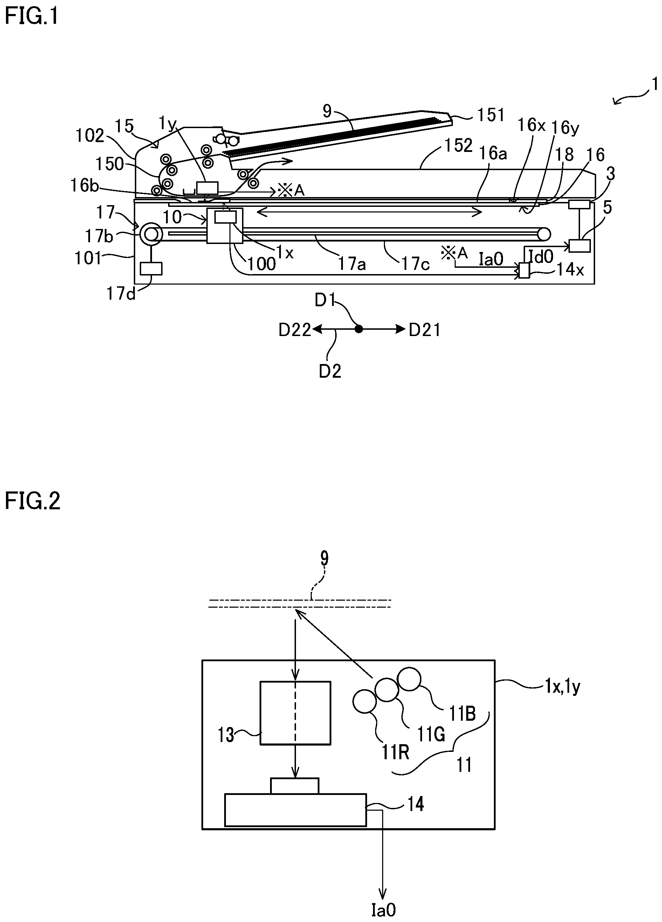

As shown in FIG. 1, the image reading apparatus 1 includes a body 101 and a body cover 102. The body 101 includes a scanning unit 10, an analog front end (AFE) 14x, a transparent plate member 16, a unit driving device 17, and the like. The body cover 102 includes a document sheet conveying device 15.

Furthermore, the image reading apparatus 1 includes a user interface device 3, a control device 5, and the like. In the example shown in FIG. 1, the user interface device 3 and the control device 5 are provided in the body 101.

The longitudinal direction of the scanning unit 10 is a main scanning direction D1. The scanning unit 10 includes a first contact image sensor unit (CIS unit) 1x and a carriage 100 that supports the first CIS unit 1x.

In FIG. 1, the depth direction of the diagram is the main scanning direction D1 and the left-right direction of the diagram is a sub-scanning direction D2. The sub-scanning direction D2 is the direction orthogonal to the main scanning direction D1.

In each of FIGS. 1, 3, and 5, a second direction D22 is one of the directions along the sub-scanning direction D2 and a first direction D21 is the other direction along the sub-scanning direction D2. That is, the first direction D21 is the opposite direction to the second direction D22.

The transparent plate member 16 is, for example, a glass plate. The transparent plate member 16 is included in a portion of the upper surface of the body 101. The transparent plate member 16 is disposed along the horizontal direction. A first surface 16x of the transparent plate member 16 is the upper surface of the transparent plate member 16 and a second surface 16y of the transparent plate member 16 is the lower surface of the transparent plate member 16.

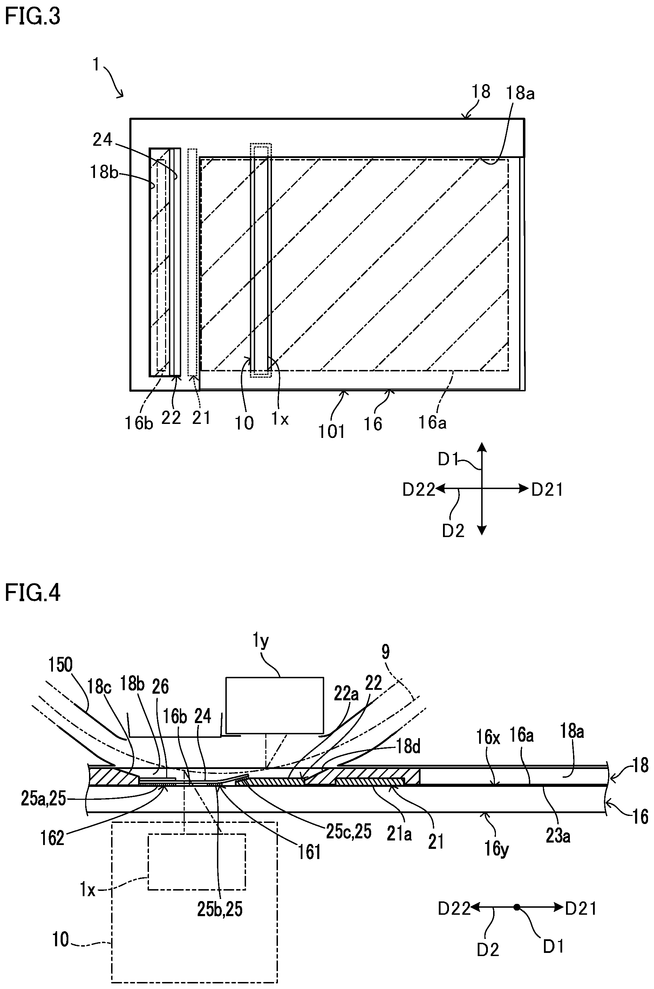

The first surface 16x of the transparent plate member 16 includes a document sheet placement region 16a and a reading region 16b (see FIGS. 1 and 3). The document sheet placement region 16a is a region in which the document sheet 9 is placed. The reading region 16b is a region that the document sheet 9 passes when the document sheet 9 is conveyed.

The reading region 16b is a region on the second direction D22 side with respect to the document sheet placement region 16a. In other words, the document sheet placement region 16a is a region on the first direction D21 side with respect to the reading region 16b.

The body 101 further includes a plate surface cover member 18 disposed along the first surface 16x of the transparent plate member 16. The plate surface cover member 18 is a synthetic-resin member.

The plate surface cover member 18 has a first opening 18a and a second opening 18b formed therein (see FIGS. 1, 3, and 4). The first opening 18a exposes a portion of the transparent plate member 16 including the document sheet placement region 16a. The second opening 18b exposes another portion of the transparent plate member 16 including the reading region 16b.

In the example shown in FIG. 3, the first opening 18a is a notch portion formed to extend inward from the front surface and the side surface of the body 101 in the first direction D21. This facilitates the document sheet 9 to be taken out from the top of the transparent plate member 16 by sliding the document sheet 9 from the top of the document sheet placement region 16a to the front surface or the side surface. The first opening 18a is a rectangular hole.

It is noted that the first opening 18a may be a notch portion formed to extend inward from the front surface of the body 101 in a rectangular shape. In this case, it is possible to take out the document sheet 9 from the top of the transparent plate member 16 by sliding the document sheet 9 from the top of the document sheet placement region 16a to the front surface.

The body 101 further includes a first white reference member 21 and a second white reference member 22 disposed along the first surface 16x of the transparent plate member 16 (see FIGS. 3 and 4). In this embodiment, the first white reference member 21 is disposed on the first direction D21 side with respect to the reading region 16b. The second white reference member 22 is disposed on the second direction D22 side with respect to the first white reference member 21.

The scanning unit 10 is supported so as to be movable in the second direction D22 and the first direction D21 in a movable region along the second surface 16y of the transparent plate member 16. The movable region extends from the region opposed to the document sheet placement region 16a to the region opposed to the reading region 16b.

The unit driving device 17 moves the scanning unit 10 in the second direction D22 or the first direction D21 in the movable region. The unit driving device 17 includes a unit support portion 17a, a motor 17b, a power transmission mechanism 17c, and a motor driving circuit 17d.

The unit support portion 17a supports the scanning unit 10 to allow the scanning unit 10 to move along the sub-scanning direction D2. The motor 17b is a driving source of a mechanism that moves the scanning unit 10. The power transmission mechanism 17c converts the rotary force of the motor 17b to force along the sub-scanning direction D2 and transmits the force to the scanning unit 10.

The motor 17b rotates in the first rotation direction or the second rotation direction to move the scanning unit 10 in the second direction D22 or the first direction D21.

The motor driving circuit 17d rotates the motor 17b in accordance with a control command from the control device 5. The control device 5 outputs the control command to bring the unit driving device 17 into operation.

The body cover 102 is supported so as to be pivotable between a closed position at which the body cover 102 covers the body surface portion and an open position at which the body cover 102 opens the body surface portion. The body surface portion is the surface portion of the body 101 along the first surface 16x of the transparent plate member 16. The body cover 102 covers the document sheet placement region 16a and the reading region 16b at the closed position.

The image reading apparatus 1 is capable of executing a stationary-document-sheet reading process. In the stationary-document-sheet reading process, the scanning unit 10 moves along the document sheet placement region 16a and the first CIS unit 1x reads an image on the surface of the document sheet 9 opposed to the transparent plate member 16. The document sheet 9 is placed in the document sheet placement region 16a.

The document sheet conveying device 15 feeds the document sheet 9 on a supply tray 151 to a conveyance path 150. Furthermore, the document sheet conveying device 15 conveys the document sheet 9 along the conveyance path 150 extending through the reading region 16b. Furthermore, the document sheet conveying device 15 conveys the document sheet 9 onto a discharge tray 152 from the conveyance path 150.

The image reading apparatus 1 is capable of executing a conveyed-document-sheet reading process with the body cover 102 closed. In the conveyed-document-sheet reading process, the unit driving device 17 holds the scanning unit 10 at the position opposed to the reading region 16b and the document sheet conveying device 15 conveys the document sheet 9 along the conveyance path 150. Furthermore, the first CIS unit 1x reads an image on a first reading surface of the document sheet 9 passing the reading region 16b.

The image reading apparatus 1 further includes a second CIS unit 1y provided in the body cover 102 (see FIGS. 1 and 4). The second CIS unit 1y is disposed to be opposed to the second white reference member 22 with the conveyance path 150 in between (see FIG. 4). That is, the second CIS unit 1y is disposed on the first direction D21 side with respect to the reading region 16b.

In the conveyed-document-sheet reading process, the second CIS unit 1y reads an image on a second reading surface of the document sheet 9 passing the reading region 16b.

As shown in FIG. 2, the first CIS unit 1x and the second CIS unit 1y each include a light emitting portion 11, a lens 13, and an image sensor 14.

The light emitting portion 11, the lens 13, and the image sensor 14 are disposed along the main scanning direction D1. The longitudinal direction of the light emitting portion 11, the lens 13, and the image sensor 14 is the main scanning direction D1.

The light emitting portion 11 emits light. The light emitting portion 11 of the first CIS unit 1x emits light to the document sheet placement region 16a or the reading region 16b through the transparent plate member 16 (see FIG. 4). The light emitting portion 11 of the second CIS unit 1y emits light to the second white reference member 22 (see FIG. 4).

When the scanning unit 10 moves along the document sheet placement region 16a, the light emitting portion 11 of the first CIS unit 1x emits light to the document sheet placement region 16a. When the scanning unit 10 is held at the position opposed to the reading region 16b, the light emitting portion 11 of the first CIS unit 1x emits light to the reading region 16b.

The light emitted by the light emitting portion 11 is reflected by the document sheet 9. For example, the light emitting portion 11 includes a light source and a light guide member disposed along the main scanning direction D1. The light guide member emits light of the light source coming from an end of the light guide member in a direction crossing the main scanning direction D1 while guiding the light of the light source in the main scanning direction D1. For example, the light guide member is a member made from synthetic resin.

The lens 13 is a condenser lens that guides, to the image sensor 14, the reflected light of light emitted from the light emitting portion 11. The reflected light is light diffused and reflected by the document sheet 9. In addition, the reflected light is light diffused and reflected by the first white reference member 21 or the second white reference member 22 described below in some cases.

The image sensor 14 receives the reflected light and senses the amount of reflected light. Furthermore, the image sensor 14 outputs, to the AFE 14x, a line image signal Ia0 indicating a result obtained by sensing the amount of reflected light (see FIG. 1).

In this embodiment, the image sensor 14 is a CMOS-type line sensor. The lens 13 is an example of a light guide member that guides the reflected light to the image sensor 14.

As described above, the first CIS unit 1x emits light to the document sheet placement region 16a and senses the amount of reflected light to read an image on one of the surfaces of the document sheet 9 placed in the document sheet placement region 16a.

Furthermore, the first CIS unit 1x emits light to the reading region 16b and senses the amount of reflected light to read an image on the first reading surface of the document sheet 9 passing the reading region 16b. The first CIS unit 1x is an example of a main optical device.

The unit driving device 17 is an example of a scanning mechanism that moves a portion or the whole of the main optical device along the second surface 16y of the transparent plate member 16 to change the light emission position of the main optical device to the reading region 16b and the document sheet placement region 16a.

In this embodiment, the unit driving device 17 moves the whole of the first CIS unit 1x along the second surface 16y of the transparent plate member 16.

Meanwhile, the second CIS unit 1y emits light to a surface of the second white reference member 22 and senses the amount of reflected light to read an image on the second reading surface of the document sheet 9 passing the surface of the read second white reference member 22. The second CIS unit 1y is an example of a sub-optical device.

The AFE 14x converts the analog line image signal la0 to digital line image data Id0 and outputs the line image data Id0 to the control device 5. The line image data Id0 includes a plurality of pieces of pixel data for one line in the main scanning direction D1.

The pieces of line image data Id0 for the plurality of lines corresponding to the one document sheet 9 are the pieces of data of the readout image corresponding to the one document sheet 9.

The image sensor 14 reads an image on the document sheet 9 as a color image. The data of the readout image is thus the data of a color image indicating the amount of reflected light of each of the three colors of red, green and blue.

In this embodiment, the light emitting portion 11 includes a red-light emitting portion 11R, a green-light emitting portion 11G, and a blue-light emitting portion 11B that respectively emit red light, green light, and blue light (see FIG. 2). The line image data Id0 for the three colors obtained when the red-light emitting portion 11R, the green-light emitting portion 11G, and the blue-light emitting portion 11B sequentially emit pieces of light is included in the data of the readout image.

The user interface device 3 includes an operation device that receives a human operation and a display device capable of displaying an image and other information. For example, the operation device includes an operation button, a touch panel, and the like. The display device includes a display panel such as a liquid-crystal panel.

The control device 5 controls various electrical devices included in the image reading apparatus 1. For example, the control device 5 controls the motor driving circuit 17d and the first CIS unit 1x to cause the image reading apparatus 1 to execute the stationary-document-sheet reading process. Furthermore, the control device 5 controls the document sheet conveying device 15, the first CIS unit 1x, and the second CIS unit 1y to cause the image reading apparatus 1 to execute the conveyed-document-sheet reading process.

Furthermore, the control device 5 executes various image processes on the line image data Id0 obtained through the stationary-document-sheet reading process or the conveyed-document-sheet reading process.

The surface of the first white reference member 21 closer to the first CIS unit 1x is a uniform white surface 21a having high diffuse reflectance. The surface of the second white reference member 22 closer to the second CIS unit 1y is a uniform white surface 22a having high diffuse reflectance. For example, both the first white reference member 21 and the second white reference member 22 are sheets or plates each made from synthetic resin.

The first white reference member 21 is disposed on the lower surface of a portion of the plate surface cover member 18 between the first opening 18a and the second opening 18b (see FIG. 4). That is, the first white reference member 21 is disposed in a region between the document sheet placement region 16a and the reading region 16b in the sub-scanning direction D2.

The second white reference member 22 is disposed at the end of a region in the second opening 18b of the plate surface cover member 18 in the first direction D21 on the first surface 16x of the transparent plate member 16 (see FIG. 4).

In this embodiment, the second white reference member 22 is disposed on the second direction D22 side with respect to the first white reference member 21 at an interval.

The control device 5 sets shading correction data for the first CIS unit 1x on the basis of readout data of the surface of the first white reference member 21 by the first CIS unit 1x. Similarly, the control device 5 sets shading correction data for the second CIS unit 1y on the basis of readout data of the surface of the second white reference member 22 by the second CIS unit 1y.

The body 101 of the image reading apparatus 1 further includes a transparent sheet 24 disposed along a region including the reading region 16b on the first surface 16x of the transparent plate member 16 (see FIGS. 3 to 4).

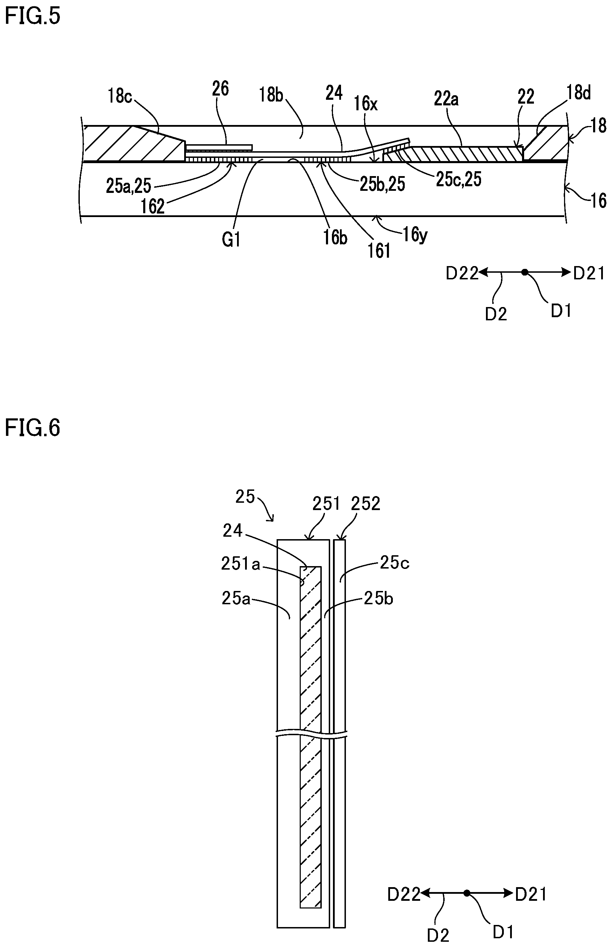

The transparent sheet 24 covers a step formed at the boundary between the first surface 16x of the transparent plate member 16 and the second white reference member 22 and smoothly guides the document sheet 9 passing the reading region 16b (see FIGS. 4 and 5).

It is necessary in the image reading apparatus 1 to restrain reflected light by the first surface 16x of the transparent plate member 16 and reflected light by the surface of the transparent sheet 24 from causing interference fringes. The interference fringes adversely influence the data of the readout image.

Incidentally, it has been known that the surface of the transparent sheet 24 undergoes surface treatment which reduces surface reflection. The sheet subjected to surface treatment is, however, a special part, leading to increasing cost. It is desirable to allow the interference fringes to be restrained from being caused without using any special part.

The image reading apparatus 1 includes a component that restrains the reflected light by the first surface 16x of the transparent plate member 16 and the reflected light by the surface of the transparent sheet 24 from causing the interference fringes without any special part. The component will be described below.

In the following description, a region adjacent to the reading region 16b on the first surface 16x of the transparent plate member 16 on the downstream side in the document sheet conveying direction will be referred to as a downstream adjacent region 161 (see FIGS. 4 and 5).

In addition, a region adjacent to the reading region 16b on the first surface 16x of the transparent plate member 16 on the upstream side in the document sheet conveying direction will be referred to as an upstream adjacent region 162 (see FIGS. 4 and 5).

In this embodiment, the document sheet conveying direction in which the document sheet 9 passes the reading region 16b is the first direction D21 (see FIGS. 1 and 3 to 5). In the following description, the downstream side in the document sheet conveying direction will be referred to as the first direction D21 side and the upstream side in the document sheet conveying direction will be referred to as the second direction D22 side.

The second white reference member 22 is disposed along a region further closer to the first direction D21 side with respect to the downstream adjacent region 161 on the first surface 16x of the transparent plate member 16. In this embodiment, the second white reference member 22 also serves as a downstream-side guide member that guides the document sheet 9 passing the reading region 16b. It can be said that the downstream-side guide member also serves as the second white reference member 22.

The body 101 of the image reading apparatus 1 further includes an adhesive layer 25 that bonds the transparent sheet 24 to the first surface 16x of the transparent plate member 16 and the surface of the second white reference member 22 (see FIGS. 4 and 5). The adhesive layer 25 includes an upstream-side adhesive layer 25a and downstream-side adhesive layers 25b and 25c. In this embodiment, the downstream-side adhesive layers 25b and 25c include the first downstream-side adhesive layer 25b and the second downstream-side adhesive layer 25c.

The upstream-side adhesive layer 25a is formed in the upstream adjacent region 162 on the first surface 16x of the transparent plate member 16 (see FIGS. 4 and 5). The downstream-side adhesive layers 25b and 25c are formed in the downstream adjacent region 161 on the first surface 16x of the transparent plate member 16 and on the surface of the second white reference member 22.

In this embodiment, the first downstream-side adhesive layer 25b is formed in the downstream adjacent region 161 and the second downstream-side adhesive layer 25c is formed on the surface of the second white reference member 22 (see FIGS. 4 and 5).

The transparent sheet 24 is disposed from the upstream adjacent region 162 on the first surface 16x of the transparent plate member 16 to the surface of the second white reference member 22 (see FIGS. 4 and 5). For example, the transparent sheet 24 has a thickness of about 0.1 to 0.2 millimeters. The transparent sheet 24 is bonded to the first surface 16x of the transparent plate member 16 and the surface of the second white reference member 22 by the upstream-side adhesive layer 25a and the downstream-side adhesive layers 25b and 25c.

The upstream-side adhesive layer 25a and the first downstream-side adhesive layer 25b form a gap G1 between the reading region 16b on the first surface 16x of the transparent plate member 16 and the transparent sheet 24 (see FIG. 5).

For example, the upstream-side adhesive layer 25a and the first downstream-side adhesive layer 25b each have a thickness of about 0.1 to 0.15 millimeters. This forms the gap G1 of about 0.1 to 0.15 millimeters between the reading region 16b of the transparent plate member 16 and the transparent sheet 24.

In general, in a case where the first surface 16x of the transparent plate member 16 and the transparent sheet 24 have an interval of about 1 micron, the interference fringes are easily caused. The gap G1 between the transparent plate member 16 and the transparent sheet 24 prevents the interference fringes from being caused.

For example, both the upstream-side adhesive layer 25a and the downstream-side adhesive layers 25b and 25c are double-sided adhesive sheets. In this embodiment, the adhesive layer 25 is composed of a first double-sided adhesive sheet 251 and a second double-sided adhesive sheet 252 (see FIG. 6).

The first double-sided adhesive sheet 251 has an opening 251a formed therein. The opening 251a exposes the reading region 16b. The portion of the first double-sided adhesive sheet 251 on the second direction D22 side with respect to the opening 251a is the upstream-side adhesive layer 25a. The portion of the first double-sided adhesive sheet 251 on the first direction D21 side with respect to the opening 251a is the first downstream-side adhesive layer 25b. In addition, the second double-sided adhesive sheet 252 is the second downstream-side adhesive layer 25c.

The image reading apparatus 1 is adopted to make it possible to restrain the interference fringes from being caused without using any special part.

The image reading apparatus 1 further includes a non-transparent sheet cover member 26 (see FIGS. 4 and 5). The sheet cover member 26 is bonded to a surface of the portion of the upstream adjacent region 162 on the transparent sheet 24. For example, the sheet cover member 26 is a sheet or a plate made from synthetic resin.

A step is formed at the boundary between the edge of the sheet cover member 26 on the downstream side in the document sheet conveying direction and the transparent sheet 24. For example, the sheet cover member 26 has a thickness of about 0.1 to 0.2 mm.

The tip of the document sheet 9 fed to the reading region 16b comes into contact with the sheet cover member 26 and then comes int contact with a portion closer to the downstream side than the portion of the sheet cover member 26 along the reading region 16b in the document sheet conveying direction.

That is, the sheet cover member 26 prevents the tip of the document sheet 9 from directly hitting the portion of the transparent sheet 24 along the reading region 16b. This makes the portion of the transparent sheet 24 along the reading region 16b more difficult to damage and makes the data of the readout image more difficult to adversely influence by damage to the transparent sheet 24.

Furthermore, the non-transparent sheet cover member 26 is provided to prevent the appearance from deteriorating because of the upstream-side adhesive layer 25a seen through the transparent sheet 24.

The image reading apparatus 1 also includes an upstream-side guide member 18c and a subsequent guide member 18d (see FIGS. 4 and 5).

The upstream-side guide member 18c is disposed along a region on the first surface 16x of the transparent plate member 16 on the upstream side with respect to the upstream adjacent region 162 in the document sheet conveying direction. The upstream-side guide member 18c guides the document sheet 9 to the surface of the sheet cover member 26 and the reading region 16b of the transparent plate member 16.

In this embodiment, the upstream-side guide member 18c is a portion of the plate surface cover member 18 on the upstream side with respect to the second opening 18b in the document sheet conveying direction.

The subsequent guide member 18d is disposed along a region on the first surface 16x of the transparent plate member 16 on the downstream side with respect to the second white reference member 22 in the document sheet conveying direction. The subsequent guide member 18d guides the document sheet 9 passing the surface of the second white reference member 22.

In this embodiment, the subsequent guide member 18d is a portion of the plate surface cover member 18 on the downstream side with respect to the second opening 18b in the document sheet conveying direction.

The upstream-side guide member 18c and the subsequent guide member 18d smoothly guide the document sheet 9 on the upstream side and the downstream side with respect to the transparent sheet 24 in the document sheet conveying direction.

### [First Modification]

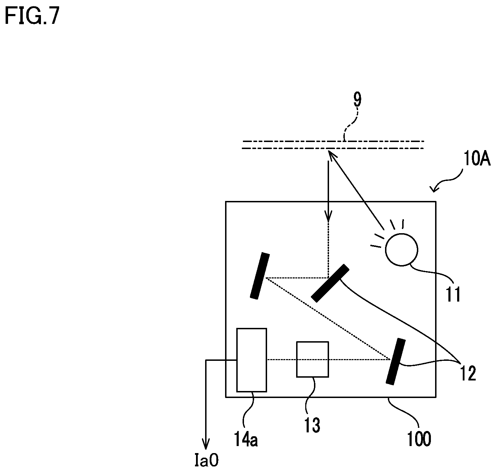

A first modification of the image reading apparatus 1 will be described below with reference to FIG. 7.

An image reading apparatus according to the first modification has a configuration in which the scanning unit 10 of the image reading apparatus 1 is replaced with a scanning unit 10A shown in FIG. 7.

The scanning unit 10A includes the light emitting portion 11, one or more mirrors 12, the lens 13, an image sensor 14a, and the carriage 100. The carriage 100 supports the light emitting portion 11, the mirrors 12, the lens 13, and the image sensor 14a.

The mirrors 12 and the lens 13 are examples of a light guide member that guides the reflected light to the image sensor 14a. The image sensor 14a is a charge coupled device (CCD)-type line sensor.

In this modification, the scanning unit 10A is an example of the main optical device. In this modification, the unit driving device 17 is an example of a scanning mechanism that moves the whole of the main optical device along the second surface 16y of the transparent plate member 16.

As with the image sensor 14, the image sensor 14a also receives light guided by the light guide member and outputs the line image signal la0 indicating the amount of received light. In a case where this modification is adopted, an effect similar to the effect obtained in a case where the image reading apparatus 1 is adopted is also obtained.

### [Second Modification]

Next, a second modification of the image reading apparatus 1 will be described. This modification is a modification of the first modification.

In this modification, the carriage 100 is divided into a first carriage and a second carriage that are different in movement speed. The first carriage supports the light emitting portion 11 and some of the plurality of mirrors 12, and the second carriage supports the rest of the plurality of mirrors 12.

In addition, the lens 13 and the image sensor 14a are fixed in the body 101.

The mirrors 12 supported by the first carriage then guide light reflected by the document sheet 9 to the mirrors 12 supported by the second carriage and the mirrors 12 supported by the second carriage guide the light to the lens 13 and the image sensor 14a fixed in the body 101.

In this modification, the first carriage, the second carriage, the light emitting portion 11, the plurality of mirrors 12, the lens 13, and the image sensor 14a are examples of the main optical device.

In this modification, the unit driving device 17 moves the first carriage and the second carriage along the second surface 16y of the transparent plate member 16. That is, in this modification, the unit driving device 17 is an example of a scanning mechanism that moves a portion of the main optical device along the second surface 16y of the transparent plate member 16.

In a case where this modification is adopted, an effect similar to the effect obtained in a case where the first modification is adopted is also obtained.

### [Supplementary Notes of Invention]

The gist of the invention extracted from the embodiment described above will be supplementarily noted below. It is noted that the respective configurations and the respective processing functions described in the following supplementary notes can be sorted out and used in any combination.

### <Supplementary Note 1>

An image reading apparatus including:
a transparent plate member;
a document sheet conveying device configured to convey a document sheet along a conveyance path extending through a reading region on a portion of a first surface of the transparent plate member;
a main optical device configured to emit light to the reading region and sense an amount of reflected light to read an image on a first reading surface of the document sheet passing the reading region, the main optical device being disposed on a second surface side of the transparent plate member;
a downstream-side guide member configured to guide the document sheet passing the reading region on the first surface of the transparent plate member, the downstream-side guide member being disposed along a region located further downstream with respect to a downstream adjacent region in a document sheet conveying direction, the downstream adjacent region being adjacent to the reading region on a downstream side in the document sheet conveying direction;
an upstream-side adhesive layer that is formed in an upstream adjacent region adjacent to the reading region on an upstream side in the document sheet conveying direction, the reading region being located on the first surface of the transparent plate member;
downstream-side adhesive layers that are formed in the downstream adjacent region on the first surface of the transparent plate member and on a surface of the downstream-side guide member; and
a transparent sheet that is disposed from the upstream adjacent region on the first surface of the transparent plate member to the surface of the downstream-side guide member and bonded to the first surface of the transparent plate member and the surface of the downstream-side guide member by the upstream-side adhesive layer and the downstream-side adhesive layers, in which
the upstream-side adhesive layer and the downstream-side adhesive layers form a gap between the reading region on the first surface of the transparent plate member and the transparent sheet.

### <Supplementary Note 2>

The image reading apparatus according to Supplementary Note 1, including a non-transparent sheet cover member that is bonded to a surface of a portion of the upstream adjacent region on the transparent sheet.

### <Supplementary Note 3>

The image reading apparatus according to Supplementary Note 2, including an upstream-side guide member configured to guide the document sheet to the surface of the sheet cover member and the reading region, the upstream-side guide member being disposed along a region on the upstream side with respect to the upstream adjacent region in the document sheet conveying direction, the upstream adjacent region being located on the first surface of the transparent plate member.

### <Supplementary Note 4>

The image reading apparatus according to any one of Supplementary Notes 1 to 3, in which both the upstream-side adhesive layer and the downstream-side adhesive layers are double-sided adhesive sheets.

### <Supplementary Note 5>

The image reading apparatus according to any one of Supplementary Notes 1 to 4, including a sub-optical device configured to emit light to the surface of the downstream-side guide member and sense an amount of reflected light to read an image on a second reading surface of the document sheet passing the surface of the downstream-side guide member, the sub-optical device being disposed to be opposed to the downstream-side guide member with the conveyance path in between, in which
the surface of the downstream-side guide member is white.

### <Supplementary Notes 6>

The image reading apparatus according to any one of Supplementary Notes 1 to 5, including:
a body including the transparent plate member, the main optical device, the downstream-side guide member, the upstream-side adhesive layer, the downstream-side adhesive layers, and the transparent sheet; and
a body cover including the document sheet conveying device, the body cover being supported so as to be movable between a closed position and an open position, the body cover covering a body surface portion of the body along the first surface of the transparent plate member at the closed position, the body cover opening the body surface portion at the open position.

### <Supplementary Note 7>

The image reading apparatus according to Supplementary Note 6, including a scanning mechanism configured to move a portion or a whole of the main optical device along the second surface of the transparent plate member to change a light emission position of the main optical device to the reading region and a document sheet placement region other than the reading region on the first surface of the transparent plate member, the scanning mechanism being disposed in the body.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image reading apparatus (1) comprising:
a transparent plate member (16);
a document sheet conveying device (15) configured to convey a document sheet along a conveyance path (150) extending through a reading region on a portion of a first surface of the transparent plate member (16);
a main optical device (1x) configured to emit light to the reading region and sense an amount of reflected light to read an image on a first reading surface of the document sheet passing the reading region, the main optical device (1x) being disposed on a second surface side of the transparent plate member (16);
a downstream-side guide member (22) configured to guide the document sheet passing the reading region on the first surface of the transparent plate member (16), the downstream-side guide member (22) being disposed along a region located further downstream with respect to a downstream adjacent region in a document sheet conveying direction, the downstream adjacent region being adjacent to the reading region on a downstream side in the document sheet conveying direction;
an upstream-side adhesive layer (25a) that is formed in an upstream adjacent region adjacent to the reading region on an upstream side in the document sheet conveying direction, the reading region being located on the first surface of the transparent plate member (16);
downstream-side adhesive layers (25b, 25c) that are formed in the downstream adjacent region on the first surface of the transparent plate member (16) and on a surface of the downstream-side guide member (22); and
a transparent sheet (24) that is disposed from the upstream adjacent region on the first surface of the transparent plate member (16) to the surface of the downstream-side guide member (22) and bonded to the first surface of the transparent plate member (16) and the surface of the downstream-side guide member (22) by the upstream-side adhesive layer (25a) and the downstream-side adhesive layers (25b, 25c), wherein
the upstream-side adhesive layer (25a) and the downstream-side adhesive layers (25b, 25c) form a gap between the reading region on the first surface of the transparent plate member (16) and the transparent sheet (24).

2. The image reading apparatus (1) according to claim 1, comprising a non-transparent sheet cover member (26) that is bonded to a surface of a portion of the upstream adjacent region on the transparent sheet (24).

3. The image reading apparatus (1) according to claim 2, comprising an upstream-side guide member (18c) configured to guide the document sheet to the surface of the sheet cover member (26) and the reading region, the upstream-side guide member (18c) being disposed along a region on the upstream side with respect to the upstream adjacent region in the document sheet conveying direction, the upstream adjacent region being located on the first surface of the transparent plate member (16).

4. The image reading apparatus (1) according to any one of claims 1 to 3, wherein both the upstream-side adhesive layer (25a) and the downstream-side adhesive layers (25b, 25c) are double-sided adhesive sheets.

5. The image reading apparatus (1) according to any one of claims 1 to 3, comprising a sub-optical device (1y) configured to emit light to the surface of the downstream-side guide member (22) and sense an amount of reflected light to read an image on a second reading surface of the document sheet passing the surface of the downstream-side guide member (22), the sub-optical device (1y) being disposed to be opposed to the downstream-side guide member (22) with the conveyance path (150) in between, wherein
the surface of the downstream-side guide member (22) is white.

6. The image reading apparatus (1) according to any one of claims 1 to 3, comprising:
a body (101) including the transparent plate member (16), the main optical device (1x), the downstream-side guide member (22), the upstream-side adhesive layer (25a), the downstream-side adhesive layers (25b, 25c), and the transparent sheet (24); and
a body cover (102) including the document sheet conveying device (15), the body cover (102) being supported so as to be movable between a closed position and an open position, the body cover (102) covering a body surface portion of the body (101) along the first surface of the transparent plate member (16) at the closed position, the body cover (102) opening the body surface portion at the open position.

7. The image reading apparatus (1) according to claim 6, comprising a scanning mechanism (17) configured to move a portion or a whole of the main optical device (1x) along the second surface of the transparent plate member (16) to change a light emission position of the main optical device (1x) to the reading region and a document sheet placement region other than the reading region on the first surface of the transparent plate member (16), the scanning mechanism (17) being disposed in the body (101).
